# EUROPEAN PATENT SPECIFICATION

(11) **EP 4 570 346 B1**
(45) Date of publication and mention of the grant of the patent: **26.08.2026**
(21) Application number: 24206912.8
(22) Date of filing: 16.10.2024
(51) Int. Cl.: B01D 35/153, B01D 35/30

(54) **FILTER UNIT**
FILTEREINHEIT
UNITÉ DE FILTRATION

(30) Priority: 29.08.2024 TW 113132556
(43) Date of publication of application: 18.06.2025
(73) Proprietor: Caware Filtering Corporation, Kaohsiung City (TW)
(72) Inventor: CHANG, Min-Hua, Kaohsiung City (TW)
(74) Representative: Savi, Massimiliano

(56) References cited:
- US-A1- 2004 144 710
- US-A1- 2009 230 047
- US-A1- 2017 072 347
- US-B1- 7 540 957

## Description

### 1. Field of the Invention

The present invention relates to a filter device, and more particularly to a filter unit that is configured to be rotated to open or close an inlet channel and an outlet channel in a filter holder at the same time.

### 2. Description of Related Art

A conventional filter unit substantially comprises a filter holder and a filter cartridge. The filter cartridge is detachably connected to the filter holder. The filter holder has an inlet channel and an outlet channel formed therein and fluidly communicating with the filter cartridge. Water from an external water source may flow into the conventional filter unit via the inlet channel in the filter holder, flows through the filter cartridge to be filtered by the filter cartridge, and flows out from the conventional filter unit via the outlet channel in the filter holder.

The conventional filter unit further comprises a valve seat and a floating check-ball mounted in the filter holder and located between the filter cartridge and the outlet channel in the filter holder. While the fluid continuously flowing into the conventional filter unit to be filtered, the flow pressure of the fluid causes the floating check-ball to be pushed away from the valve seat to open the valve seat, so the filtered fluid is able to flow out from the filter cartridge. When the filter cartridge is detached from the filter holder, the floating check-ball is able to fall down to close the valve seat due to gravity, thereby preventing the fluid remaining in the outlet channel of the filter holder from flowing reversely out of the filter holder. Since the valve seat and the floating check-ball are disposed between the outlet channel of the filter holder and the filter cartridge, the fluid remaining inside the inlet channel is prone to drip from the filter holder when the filter cartridge is removed from the filter holder. Further to this, it is difficult to assemble the structure of the valve seat and the floating check-ball. Reliability of closing the valve seat by the floating check-ball is poor, and the fluid remaining in the outlet channel may still drip from the valve seat.

Another conventional filter unit comprises a check valve disposed in the outlet channel of the filter holder. The check valve includes a valve ball and a spring configured for pushing the valve ball to close the outlet channel in the filter holder. However, the valve ball and the spring are both made of a metallic material, are easily oxidized if soaked in liquid for a long time to pollute the fluid. Reliability of closing the outlet channel via the valve ball pushed by the spring is also poor. In addition, the check valve is only disposed in the outlet channel of the filter holder, after removing the filter cartridge from the filter holder, the fluid remaining inside the inlet channel is prone to drip from the filter holder.

In addition, other conventional filter units are also disclosed in US 2004/144710A and US 7540957 B.

To overcome the shortcomings, the present invention tends to provide a filter unit to mitigate or obviate the aforementioned problems.

The main objective of the invention is to provide a filter unit that is configured to open or close an outlet channel and an inlet channel at the same time by a rotating operation.

A filter unit comprises a filter cartridge and rotary filter holder assembly detachably mounted to a top portion of the filter cartridge. The rotary filter holder assembly comprises an annular check valve, a filter holder, and a closing pad. The annular check valve is disposed on the top portion of the filter cartridge, is configured to be rotated with the filter cartridge, and comprises a base disposed on the top portion of the filter cartridge and configured to be rotated with the filter cartridge, a neck part extending from a top of the base, an inlet opening formed in the neck part and fluidly communicating with the filter cartridge, an outlet opening formed in the top of the base and fluidly communicating with the filter cartridge, and a sealing pad disposed at a periphery of the neck part and spaced apart from the inlet opening by an angular interval. The filter holder is disposed on, surrounds, and is rotatably connected to the annular check valve, and comprises an inlet channel and an outlet channel. The closing pad is made of elastomers and is fixed to the bottom of the filter holder. The annular check valve is configured to be rotated relative to the filter holder to a closed position and an opened position. When the annular check valve is located at the closed position, the inlet channel of the filter holder is sealed by the sealing pad, the outlet channel of the filter holder is closed by the top of the base, and the outlet opening of the annular check valve is directly below the closing pad and is sealed by the closing pad. When the annular check valve is located at the opened position, the inlet channel of the filter holder fluidly communicates with the inlet opening of the annular check valve and the outlet channel of the filter holder fluidly communicates with the outlet opening of the annular check valve.

Other objects, advantages and novel features of the invention will become more apparent from the following detailed description when taken in conjunction with the accompanying drawings.

### IN THE DRAWINGS:

Fig. 1 is a perspective view of a first embodiment of a filter unit in accordance with the present invention;
Fig. 2 is an exploded perspective view of the filter unit in Fig. 1;
Fig. 3 is an exploded perspective view of a rotary filter holder assembly of the filter unit in Fig. 2;
Fig. 4 is another exploded perspective view of the rotary filter holder assembly of the filter unit in Fig. 1;
Fig. 5 is an exploded perspective view of an annular check valve of the rotary filter holder assembly in Fig. 3;
Fig. 6 is an enlarged cross-sectional side view of the filter unit in Fig. 1 showing that the annular check valve is located at a closed position;
Fig. 7 is an enlarged cross-sectional side view of the filter unit in Fig. 1 showing that the annular check valve is located at an opened position;
Fig. 8 is a cross-sectional top view of the filter unit in Fig. 1 showing that the annular check valve is located at the closed position;
Fig. 9 is a top view of the filter unit in Fig. 1 showing that the annular check valve is located at the closed position, wherein a filter holder is omitted;
Fig. 10 is a cross-sectional top view of the filter unit in Fig. 1 showing that the annular check valve is located at the opened position;
Fig. 11 is a top view of the filter unit in Fig. 1 showing that the annular check valve is located at the opened position, wherein the filter holder is omitted;
Fig. 12 is a cross-sectional top view of the filter unit in Fig. 1;
Fig. 13 is an enlarged cross-sectional side view of a second embodiment of a filter unit in accordance with the present invention; and
Fig. 14 is an enlarged cross-sectional side view of a third embodiment of a filter unit in accordance with the present invention.

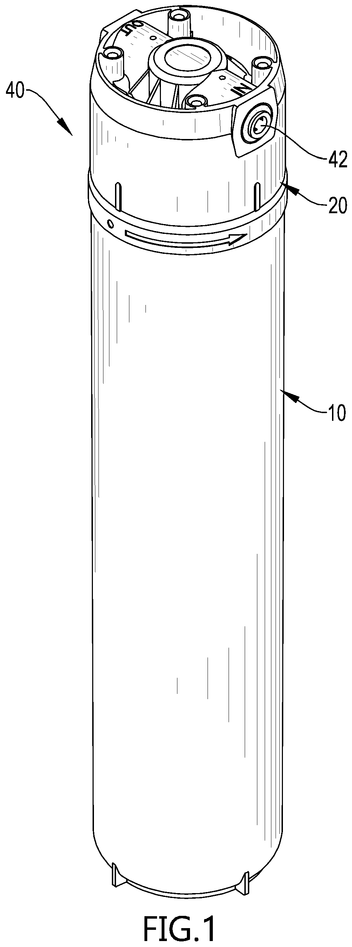

With reference to Figs. 1 to 4, a first embodiment of a filter unit in accordance with the present invention comprises a filter cartridge 10 and a rotary filter holder assembly 20. The rotary filter holder assembly 20 is detachably mounted to a top portion of the filter cartridge 10 and comprises an annular check valve 30 and a filter holder 40.

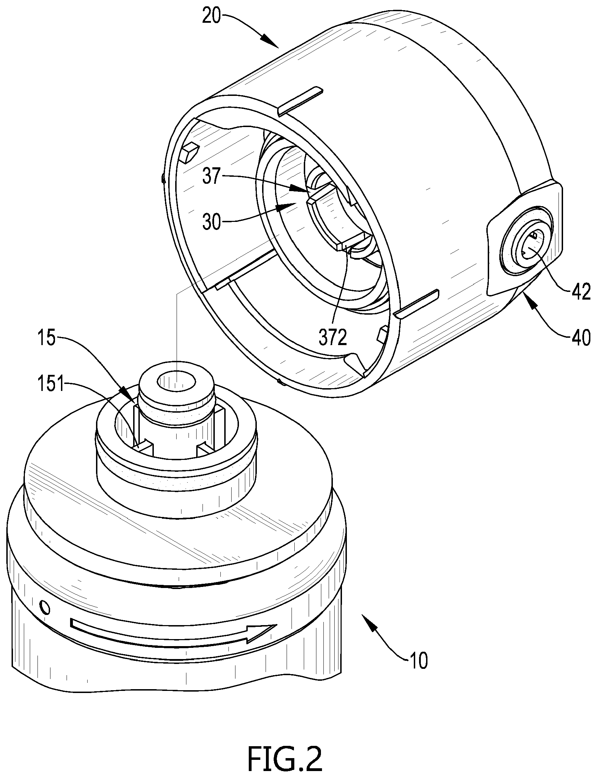

With reference to Figs. 2 to 6, the annular check valve 30 is disposed on the top portion of the filter cartridge 10 and is configured to be rotated with the filter cartridge 10. The annular check valve 30 comprises a base 31, a neck part 33, an inlet opening 32, an outlet opening 34, and a sealing pad 35. The base 31 is disposed on the top portion of the filter cartridge 10 and is configured to be rotated with the filter cartridge 10. The neck part 33 extends upwardly from a top of the base 31. The inlet opening 32 is formed in the neck part 33 and fluidly communicates with the filter cartridge 10. The outlet opening 34 is formed in the top of the base 31 and fluidly communicates with the filter cartridge 10. The sealing pad 35 is disposed to a periphery of the neck part 33 and is spaced apart from the inlet opening 32 by an angular interval.

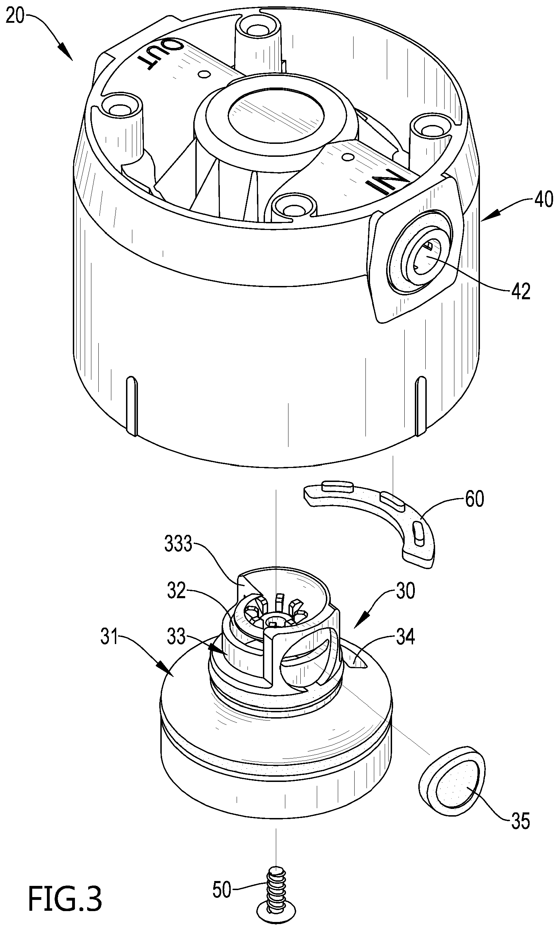

With reference to Figs. 3, 4, 6, and 7, the filter holder 40 is disposed on, surrounds, and is rotatably connected to the annular check valve 30. The filter holder 40 comprises an inlet channel 42 and an outlet channel 44.

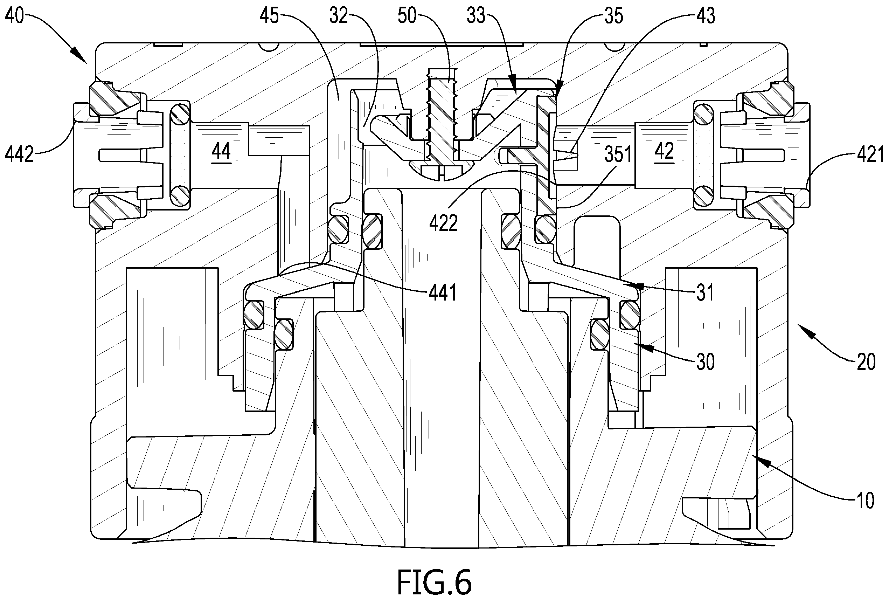

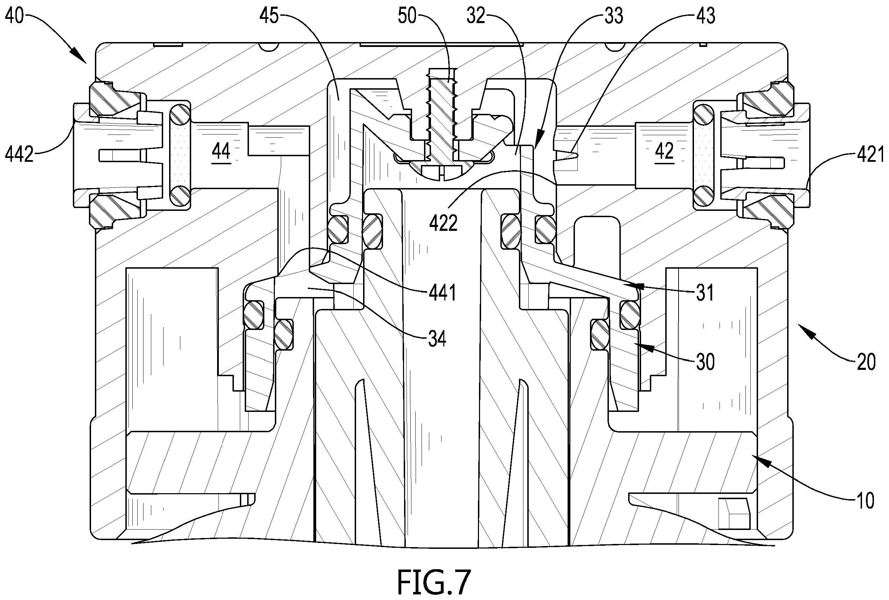

The annular check valve 30 is configured to be rotated relative to the filter holder 40 to a closed position as shown in Figs. 6, 8, and 9 and to an opened position as shown in Figs. 7, 10, and 11.

As shown in Fig. 6, when the annular check valve 30 is located at the closed position, the inlet channel 42 of the filter holder 40 is sealed by the sealing pad 35, and the outlet channel 44 of the filter holder 40 is closed by the top of the base 31. Therefore, fluid remaining in the inlet channel 42 and the outlet channel 44 cannot drip out of the filter holder 40.

As shown in Fig. 7, when the annular check valve 30 is located at the opened position, the inlet channel 42 of the filter holder 40 fluidly communicates with the inlet opening 32 of the annular check valve 30, and the outlet channel 44 of the filter holder 40 fluidly communicates with the outlet opening 34 of the annular check valve 30. Therefore, fluid from an external water source is able to sequentially flow through the inlet channel 42 of the filter holder 40, the inlet opening 32 of the annular check valve 30, and into the filter cartridge 10 to be filtered by the filter cartridge 10. The filtered fluid is able to flow out of the filter unit from the filter cartridge 10 through the outlet opening 34 of the annular check valve 30 and the outlet channel 44 of the filter holder 40 in sequence.

With reference to Figs. 3, 4, 6, and 7, the filter holder 40 comprises a mounting chamber 45 extending upwardly from a bottom of the filter holder 40. The inlet channel 42 of the filter holder 40 fluidly communicates with the mounting chamber 45. The inlet channel 42 radially extends from an external peripheral surface of the filter holder 40 to the mounting chamber 45 and forms an inlet port 421 at the external peripheral surface of the filter holder 40 and an outlet port 422 fluidly communicating with the mounting chamber 45. The neck part 33 of the annular check valve 30 extends into the mounting chamber 45 and tightly seals the mounting chamber 45. The inlet opening 32 of the annular check valve 30 fluidly communicates with the mounting chamber 45. The outlet channel 44 is disposed outside of and spaced apart from the mounting chamber 45. The outlet channel 44 extends upwardly from the bottom of the filter holder 40 and then extends radially to the external peripheral surface of the filter holder 40 as an inverted-L shape. The outlet channel 44 has an inlet port 441 and an outlet port 442. The inlet port 441 faces toward the top of the base 31 of the annular check valve 30 and fluidly communicates with the outlet opening 34 of the annular check valve 30 selectively. The outlet port 442 is formed in the external peripheral surface of the filter holder 40.

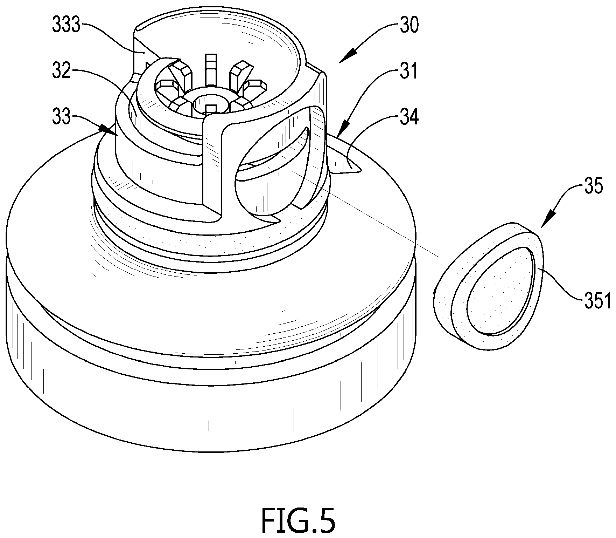

With reference to Figs. 5 and 6, the sealing pad 35 may be made of elastomers, e.g. silicone or rubber, is fixed to the neck part 33, and tightly abuts against a peripheral surface of the mounting chamber 45. When the annular check valve 30 is located at the closed position, the sealing pad 35 tightly abuts against the peripheral surface of the mounting chamber 45 and seals the outlet port 422 of the inlet channel 42 of the filter holder 40 to prevent the fluid remaining in the inlet channel 42 from flowing into the mounting chamber 45. The sealing pad 35 has an annular protrusion 351 formed at a side of the sealing pad 35 facing toward the peripheral surface of the mounting chamber 45. The annular protrusion 351 is configured to surround the outlet port 422 of the inlet channel 42 facing toward the mounting chamber 45 when the annular check valve 30 is rotated to the closed position.

With reference to Figs. 6 and 7, a guiding rib 43 is disposed in the outlet port 422 of the inlet channel 42 and has two ends extending to and connected to a periphery of the inlet channel 42. The guiding rib 43 has a top surface inclined downwardly toward the external peripheral surface of the filter holder 40 and a bottom surface inclined upwardly toward the external peripheral surface of the filter holder 40. The guiding rib 43 has a triangular section. The guiding rib 43 is configured to guide the flow direction to avoid energy loss caused by turbulent. A side of the guiding rib 43 facing toward the mounting chamber 45 is configured to support the sealing pad 35, thereby preventing the sealing pad 35 from deforming and partially inserted into the inlet channel 42 during rotation of the annular check valve 30 relative to the filter holder 40.

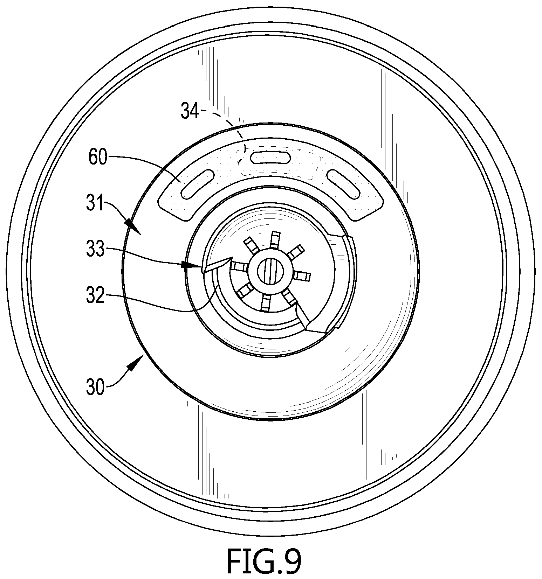

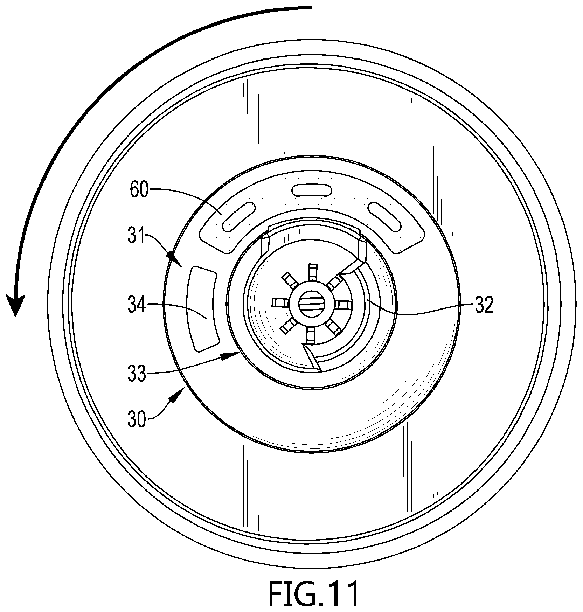

With reference to Figs. 3, 4, 9, and 11, the rotary filter holder assembly 20 further comprises a closing pad 60. The closing pad 60 may be made of elastomers, e.g. silicone or rubber, and is fixed to the bottom of the filter holder 40. With reference to Figs. 6 and 9, when the annular check valve 30 is located at the closed position, the outlet opening 34 of the annular check valve 30 is located directly below the closing pad 60 and is sealed by the closing pad 60, thereby preventing the fluid remaining in the outlet channel 44 of the filter holder 40 from flowing reversely into the outlet opening 34. With reference to Figs. 7 and 11, when the annular check valve 30 is rotated to the opened position, the outlet opening 34 of the annular check valve 30 is moved away from the closing pad 60 to be opened and is moved to a position to fluidly communicate with the outlet channel 44. Therefore the fluid filtered by the filter cartridge 10 is able to pass the outlet opening 34 of the annular check valve 30 and enter into the outlet channel 44.

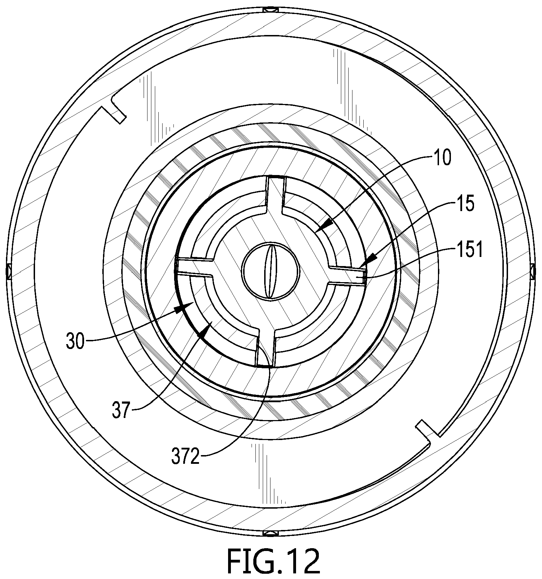

With reference to Figs. 2, 4, and 12, the top portion of the filter cartridge 10 has a blocking portion 15. The annular check valve 30 has an engagement portion 37 at a bottom of the base 31 and engaging with the blocking portion 15 to fix the annular check valve 30 on the filter cartridge 10, so the annular check valve 30 is capable of rotating with the filter cartridge 10. Specifically, the blocking portion 15 includes multiple blocking ribs 151 arranged at angular intervals. The engagement portion 37 includes multiple engaging notches 372 arranged at angular intervals to receive the multiple blocking ribs 151. The blocking ribs 151 respectively extend into and engage with the engaging notches 372 to fix the orientation of the annular check valve 30 and the filter cartridge 10, whereby the annular check valve 30 is capable of rotating with the filter cartridge 10.

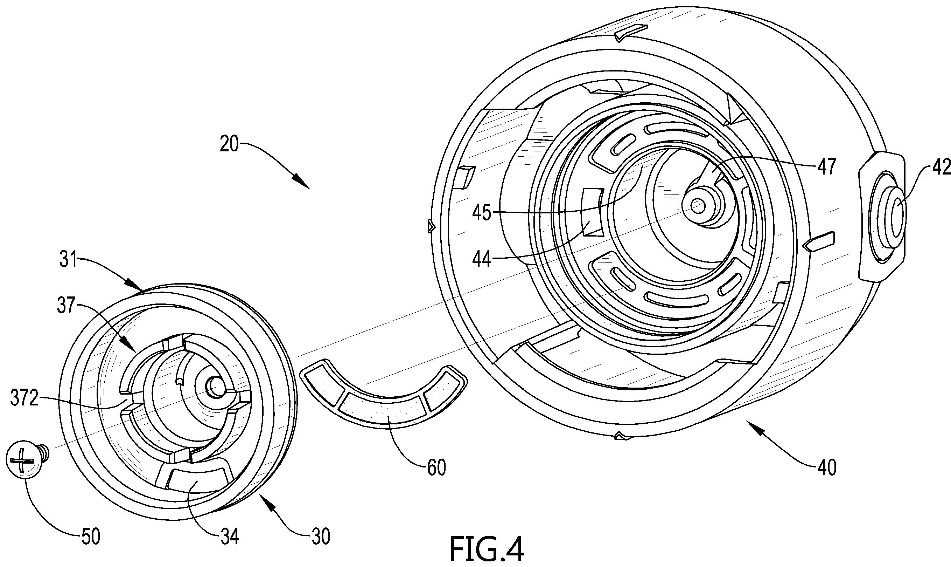

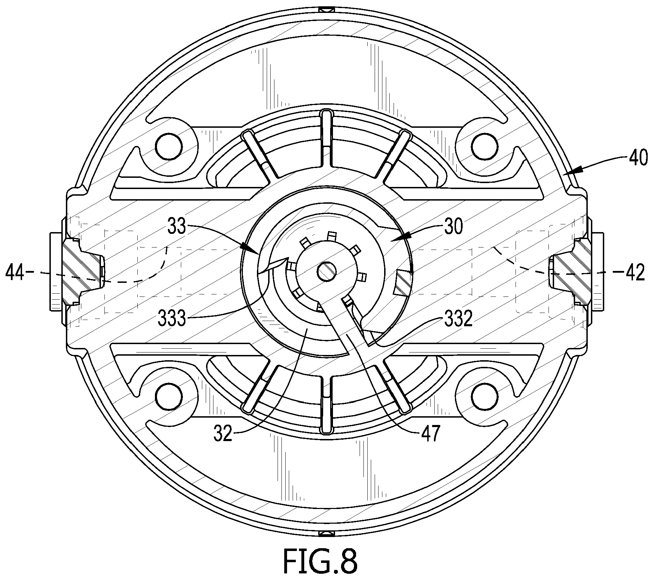

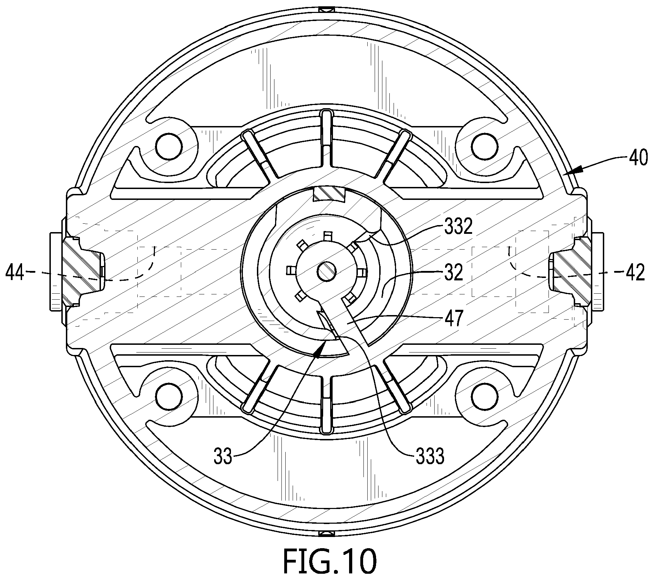

With reference to Figs. 4, 5, 8, and 10, the neck part 33 of the annular check valve 30 has a first limited surface 332 and a second limited surface 333 arranged at an angular interval. The filter holder 40 comprises a limiting block 47 configured to abut against the first limited surface 332 or the second limited surface 333. As shown in Fig. 8, when the limiting block 47 abuts against the first limited surface 332, the annular check valve 30 is located at the closed position. As shown in Fig. 10, when the limiting block 47 abuts against the second limited surface 333, the annular check valve 30 is located at the opened position. A rotatable angle of the annular check valve 30 relative to the filter holder 40 can be limited by blocking the first limited surface 332 and the second limited surface 333 via the limiting block 47, and therefore the annular check valve 30 is limited at the closed position or the opened position.

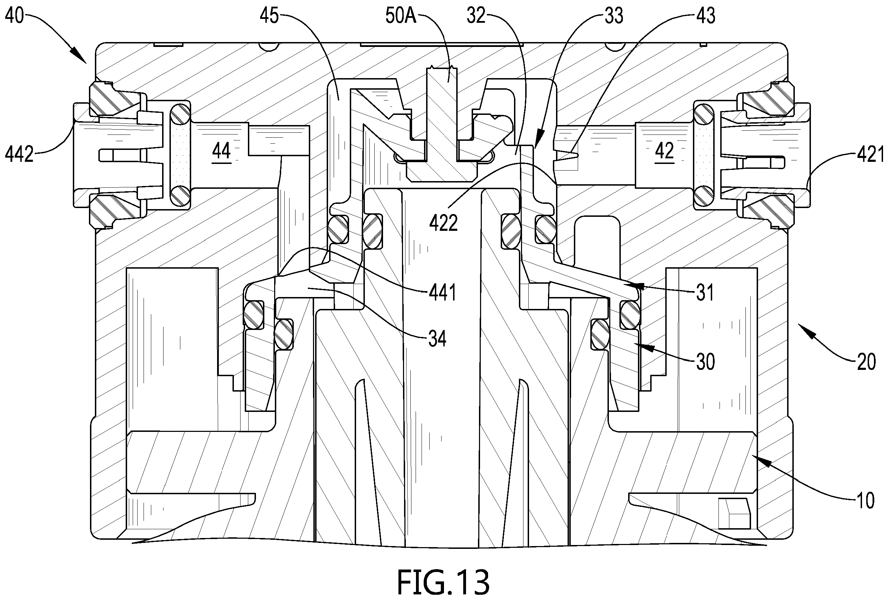

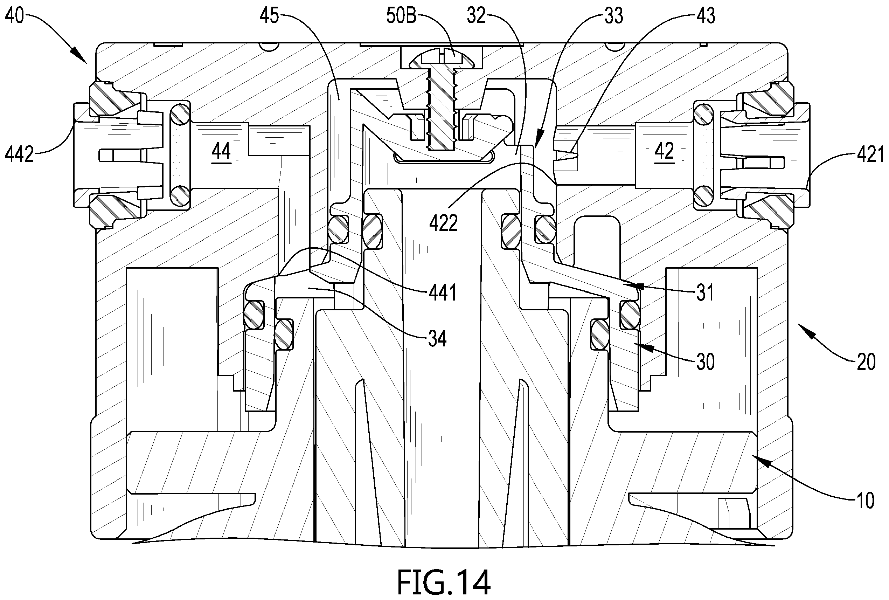

With reference to Figs. 4, 6, and 7, the annular check valve 30 is connected to the filter holder 40 via a shaft 50 and is rotatable relative to the filter holder 40 along the shaft 50. In the first embodiment, the shaft 50 is made of a non-metallic material, has a thread spirally around the shaft 50, is mounted through the annular check valve 30 via the bottom of the annular check valve 30, and is screwed with the filter holder 40. So the annular check valve 30 is rotatable relative to the filter holder 40 along the shaft 50. With reference to Fig. 13, in the second embodiment, the shaft 50A is made of a plastic material, is mounted through the annular check valve 30, and is fixed to and combined with the filter holder 40 by ultrasonic welding. With reference to Fig. 14, in the third embodiment, the shaft 50B is mounted through the filter holder 40 from the top of the filter holder 40 and is fixed to the annular check valve 30 by threaded engagement or by ultrasonic welding.

With reference to Fig. 7, since the rotary filter holder assembly 20 comprises the annular check valve 30 being rotatable relative to the filter holder 40, after assembling the filter cartridge 10 with the rotary filter holder assembly 20, a user can rotate the filter cartridge 10 to drive the annular check valve 30 to rotate to the opened position, thereby the inlet channel 42 of the filter holder 40 fluidly communicating with the inlet opening 32 of the annular check valve 30 and the outlet channel 44 of the filter holder 40 fluidly communicating with the outlet opening 34 of the annular check valve 30. Fluid from the external water source flows into the filter cartridge 10 to be filtered by the filter cartridge 10 through the inlet channel 42 of the filter holder 40 and the inlet opening 32 of the annular check valve 30 in sequence. The filtered fluid flows out of the filter unit through the outlet opening 34 of the annular check valve 30 and the outlet channel 44 of the filter holder 40 in sequence.

With reference to Fig. 6, to replace the filter cartridge 10, the user may rotate the filter cartridge 10 to drive the annular check valve 30 to rotate to the closed position, thereby sealing the inlet channel 42 of the filter holder 40 by the sealing pad 35 and to close the outlet channel 44 of the filter holder 40 by the top of the base 31, and then the user may remove the filter cartridge 10 from the rotary filter holder assembly 20. As the inlet channel 42 and the outlet channel 44 of the filter holder 40 are closed by the annular check valve 30 at the same time, the fluid remaining in the inlet channel 42 and the outlet channel 44 is prevented from dripping out of the filter holder 40. Both the inlet channel 42 and the outlet channel 44 can be sealed without leakage.

## Claims

1. A filter unit, comprising:
a filter cartridge (10) comprising
a top portion;
a rotary filter holder assembly (20) detachably mounted to the top portion of the filter cartridge (10) and comprising
an annular check valve (30) disposed on the top portion of the filter cartridge (10), configured to be rotated with the filter cartridge (10), and comprising
a base (31) disposed on the top portion of the filter cartridge (10), configured to be rotated with the filter cartridge (10), and having
a top; and
a bottom;
a neck part (33) extending from the top of the base (31);
an inlet opening (32) formed in the neck part (33) and fluidly communicating with the filter cartridge (10);
an outlet opening (34) formed in the top of the base (31) and fluidly communicating with the filter cartridge (10); and
a sealing pad (35) disposed at a periphery of the neck part (33) and spaced apart from the inlet opening (32) by an angular interval; and
a filter holder (40) disposed on, surrounding, and rotatably connected to the annular check valve (30), and the filter holder (40) comprising
a top;
a bottom;
an external peripheral surface;
an inlet channel (42); and
an outlet channel (44);
wherein the annular check valve (30) is configured to be rotated relative to the filter holder (40) to a closed position and an opened position;
when the annular check valve (30) is located at the closed position, the inlet channel (42) of the filter holder (40) is sealed by the sealing pad (35); and
when the annular check valve (30) is located at the opened position, the inlet channel (42) of the filter holder (40) fluidly communicates with the inlet opening (32) of the annular check valve (30), and the outlet channel (44) of the filter holder (40) fluidly communicates with the outlet opening (34) of the annular check valve (30);
**characterized in that**
the rotary filter holder assembly (20) comprises a closing pad (60) made of elastomers and fixed to the bottom of the filter holder (40); and
when the annular check valve (30) is at the closed position, the outlet opening (34) of the annular check valve (30) is directly below the closing pad (60) and is sealed by the closing pad (60).

2. The filter unit as claimed in claim 1, wherein the annular check valve (30) is connected to the filter holder (40) via a shaft (50, 50A, 50B) and is rotatable relative to the filter holder (40) along the shaft (50, 50A, 50B).

3. The filter unit as claimed in claim 2, wherein
the filter holder (40) comprises a mounting chamber (45) extending upwardly from the bottom of the filter holder (40);
the inlet channel (42) of the filter holder (40) fluidly communicates with the mounting chamber (45);
the neck part (33) of the annular check valve (30) extends into the mounting chamber (45);
the inlet opening (32) of the annular check valve (30) fluidly communicates with the mounting chamber (45);
the outlet channel (44) of the filter holder (40) is disposed outside of and spaced apart from the mounting chamber (45), extends upwardly from the bottom of the filter holder (40) and then extends toward the external peripheral surface of the filter holder (40); and
the sealing pad (35) is made of elastomers, is fixed to the neck part (33), and tightly abuts against a peripheral surface of the mounting chamber (45).

4. The filter unit as claimed in claim 3, wherein
the sealing pad (35) has an annular protrusion (351) formed at a side of the sealing pad (35) facing toward the peripheral surface of the mounting chamber (45), and tightly abuts against the peripheral surface of the mounting chamber (45); and
when the annular check valve (30) is located at the closed position, the annular protrusion (351) surrounds an outlet port (422) of the inlet channel (42) facing toward the mounting chamber (45).

5. The filter unit as claimed in claim 4, wherein
the top portion of the filter cartridge (10) comprises a blocking portion (15) including multiple blocking ribs (151) arranged at angular intervals; and
the annular check valve (30) comprises an engagement portion (37) at the bottom of the base (31) of the annular check valve (30) and including multiple engaging notches (372) arranged at angular intervals; and
the multiple blocking ribs (151) respectively extend into and engage with the engaging notches (372).

6. The filter unit as claimed in claim 5, wherein
the neck part (33) of the annular check valve (30) has a first limited surface (332) and a second limited surface (333) arranged at an angular interval;
the filter holder (40) comprises a limiting block (47) configured to abut against the first limited surface (332) or the second limited surface (333);
when the limiting block (47) abuts against the first limited surface (332), the annular check valve (30) is located at the closed position; and
when the limiting block (47) abuts against the second limited surface (333), the annular check valve (30) is located at the opened position.

7. The filter unit as claimed in claim 6, wherein
a guiding rib (43) is disposed in the outlet port (422) of the inlet channel (42) and has
a top surface inclined downwardly toward the external peripheral surface of the filter holder (40); and
a bottom surface inclined upwardly toward the external peripheral surface of the filter holder (40).

## Patentansprüche

1. Filtereinheit, umfassend:
eine Filterpatrone (10), umfassend
einen oberen Abschnitt;
eine Drehfilterhalteranordnung (20), die abnehmbar an dem oberen Abschnitt der Filterpatrone (10) montiert ist und umfasst
ein ringförmiges Rückschlagventil (30), das an dem oberen Abschnitt der Filterpatrone (10) angeordnet ist, dazu konfiguriert ist, mit der Filterpatrone (10) gedreht zu werden, und umfasst
eine Basis (31), die an dem oberen Abschnitt der Filterpatrone (10) angeordnet ist, dazu konfiguriert ist, mit der Filterpatrone (10) gedreht zu werden, und aufweist
eine Oberseite; und
eine Unterseite;
ein Halsteil (33), das sich von der Oberseite der Basis (31) erstreckt;
eine Einlassöffnung (32), die in dem Halsteil (33) gebildet ist und in Fluidverbindung mit der Filterpatrone (10) steht;
eine Auslassöffnung (34), die in der Oberseite der Basis (31) gebildet ist und in Fluidverbindung mit der Filterpatrone (10) steht; und
ein Dichtungspolster (35), das an einem Umfang des Halsteils (33) angeordnet und von der Einlassöffnung (32) durch ein Winkelintervall beabstandet ist; und
einen Filterhalter (40), der an dem ringförmigen Rückschlagventil (30) angeordnet ist, dieses umgibt und drehbar mit diesem verbunden ist, wobei der Filterhalter (40) umfasst
eine Oberseite;
eine Unterseite;
eine äußere Umfangsfläche;
einen Einlasskanal (42); und
einen Auslasskanal (44);
wobei das ringförmige Rückschlagventil (30) dazu konfiguriert ist, relativ zu dem Filterhalter (40) in eine geschlossene Position und eine geöffnete Position gedreht zu werden;
wenn sich das ringförmige Rückschlagventil (30) in der geschlossenen Position befindet, der Einlasskanal (42) des Filterhalters (40) durch das Dichtungspolster (35) abgedichtet ist; und
wenn sich das ringförmige Rückschlagventil (30) in der geöffneten Position befindet, der Einlasskanal (42) des Filterhalters (40) in Fluidverbindung mit der Einlassöffnung (32) des ringförmigen Rückschlagventils (30) steht und der Auslasskanal (44) des Filterhalters (40) in Fluidverbindung mit der Auslassöffnung (34) des ringförmigen Rückschlagventils (30) steht;
**dadurch gekennzeichnet, dass**
die Drehfilterhalteranordnung (20) ein Schließpolster (60) umfasst, das aus Elastomeren hergestellt und an der Unterseite des Filterhalters (40) befestigt ist; und
wenn sich das ringförmige Rückschlagventil (30) in der geschlossenen Position befindet, die Auslassöffnung (34) des ringförmigen Rückschlagventils (30) direkt unter dem Schließpolster (60) liegt und durch das Schließpolster (60) abgedichtet ist.

2. Filtereinheit nach Anspruch 1, wobei das ringförmige Rückschlagventil (30) mit dem Filterhalter (40) über eine Welle (50, 50A, 50B) verbunden und relativ zu dem Filterhalter (40) entlang der Welle (50, 50A, 50B) drehbar ist.

3. Filtereinheit nach Anspruch 2, wobei
der Filterhalter (40) eine Montagekammer (45) umfasst, die sich von der Unterseite des Filterhalters (40) nach oben erstreckt;
der Einlasskanal (42) des Filterhalters (40) in Fluidverbindung mit der Montagekammer (45) steht;
das Halsteil (33) des ringförmigen Rückschlagventils (30) sich in die Montagekammer (45) hinein erstreckt;
die Einlassöffnung (32) des ringförmigen Rückschlagventils (30) in Fluidverbindung mit der Montagekammer (45) steht;
der Auslasskanal (44) des Filterhalters (40) außerhalb der Montagekammer (45) und von dieser beabstandet angeordnet ist, sich von der Unterseite des Filterhalters (40) nach oben erstreckt und sich dann zur äußeren Umfangsfläche des Filterhalters (40) hin erstreckt; und
das Dichtungspolster (35) aus Elastomeren hergestellt ist, an dem Halsteil (33) befestigt ist und fest an einer Umfangsfläche der Montagekammer (45) anliegt.

4. Filtereinheit nach Anspruch 3, wobei
das Dichtungspolster (35) einen ringförmigen Vorsprung (351) aufweist, der an einer zur Umfangsfläche der Montagekammer (45) hin gewandten Seite des Dichtungspolsters (35) gebildet ist und fest an der Umfangsfläche der Montagekammer (45) anliegt; und
wenn sich das ringförmige Rückschlagventil (30) in der geschlossenen Position befindet, der ringförmige Vorsprung (351) einen zur Montagekammer (45) hin gewandten Auslassanschluss (422) des Einlasskanals (42) umgibt.

5. Filtereinheit nach Anspruch 4, wobei
der obere Abschnitt der Filterpatrone (10) einen Blockierabschnitt (15) umfasst, der mehrere Blockierrippen (151) beinhaltet, die in Winkelintervallen angeordnet sind; und
das ringförmige Rückschlagventil (30) einen Eingriffsabschnitt (37) an der Unterseite der Basis (31) des ringförmigen Rückschlagventils (30) umfasst und mehrere Eingriffskerben (372) beinhaltet, die in Winkelintervallen angeordnet sind; und
die mehreren Blockierrippen (151) sich jeweils in die Eingriffskerben (372) hinein erstrecken und mit diesen in Eingriff stehen.

6. Filtereinheit nach Anspruch 5, wobei
das Halsteil (33) des ringförmigen Rückschlagventils (30) eine erste Begrenzungsfläche (332) und eine zweite Begrenzungsfläche (333) aufweist, die in einem Winkelintervall angeordnet sind;
der Filterhalter (40) einen Begrenzungsblock (47) umfasst, der dazu konfiguriert ist, an der ersten Begrenzungsfläche (332) oder der zweiten Begrenzungsfläche (333) anzuliegen;
wenn der Begrenzungsblock (47) an der ersten Begrenzungsfläche (332) anliegt, das ringförmige Rückschlagventil (30) sich in der geschlossenen Position befindet; und
wenn der Begrenzungsblock (47) an der zweiten Begrenzungsfläche (333) anliegt, das ringförmige Rückschlagventil (30) sich in der geöffneten Position befindet.

7. Filtereinheit nach Anspruch 6, wobei
eine Führungsrippe (43) in dem Auslassanschluss (422) des Einlasskanals (42) angeordnet ist und aufweist
eine zur äußeren Umfangsfläche des Filterhalters (40) hin nach unten geneigte obere Fläche; und
eine zur äußeren Umfangsfläche des Filterhalters (40) hin nach oben geneigte untere Fläche.

## Revendications

1. Unité de filtre, comprenant :
une cartouche filtrante (10) comprenant
une portion supérieure ;
un ensemble porte-filtre rotatif (20) monté amovible sur la portion supérieure de la cartouche filtrante (10) et comprenant
une valve anti-retour annulaire (30) disposée sur la portion supérieure de la cartouche filtrante (10), configurée pour tourner avec la cartouche filtrante (10), et comprenant
une base (31) disposée sur la portion supérieure de la cartouche filtrante (10), configurée pour tourner avec la cartouche filtrante (10), et ayant
un sommet ; et
un fond ;
une partie de col (33) s'étendant à partir du sommet de la base (31) ;
une ouverture d'entrée (32) formée dans la partie de col (33) et communiquant fluidiquement avec la cartouche filtrante (10) ;
une ouverture de sortie (34) formée dans le sommet de la base (31) et communiquant fluidiquement avec la cartouche filtrante (10) ; et
un tampon d'étanchéité (35) disposé à une périphérie de la partie de col (33) et espacé à l'écart de l'ouverture d'entrée (32) par un intervalle angulaire ; et
un porte-filtre (40) disposé sur, entourant et relié rotatif à la valve anti-retour annulaire (30), et le porte-filtre (40) comprenant
un sommet ;
un fond ;
une surface périphérique externe ;
un canal d'entrée (42) ; et
un canal de sortie (44) ;
dans laquelle la valve anti-retour annulaire (30) est configurée pour être tournée par rapport au porte-filtre (40) vers une position fermée et une position ouverte ;
lorsque la valve anti-retour annulaire (30) est placée dans la position fermée, le canal d'entrée (42) du porte-filtre (40) est scellé par le tampon d'étanchéité (35) ; et
lorsque la valve anti-retour annulaire (30) est placée dans la position ouverte, le canal d'entrée (42) du porte-filtre (40) communique fluidiquement avec l'ouverture d'entrée (32) de la valve anti-retour annulaire (30), et le canal de sortie (44) du porte-filtre (40) communique fluidiquement avec l'ouverture de sortie (34) de la valve anti-retour annulaire (30) ;
**caractérisée en ce que**
l'ensemble porte-filtre rotatif (20) comprend un tampon de fermeture (60) réalisé en élastomères et fixé au fond du porte-filtre (40) ; et
lorsque la valve anti-retour annulaire (30) est en position fermée, l'ouverture de sortie (34) de la valve anti-retour annulaire (30) se trouve directement en dessous du tampon de fermeture (60) et elle est scellée par le tampon de fermeture (60).

2. Unité de filtre selon la revendication 1, dans laquelle la valve anti-retour annulaire (30) est reliée au porte-filtre (40) via un arbre (50, 50A, 50B) et elle est rotative par rapport au porte-filtre (40) le long de l'arbre (50, 50A, 50B).

3. Unité de filtre selon la revendication 2, dans laquelle
le porte-filtre (40) comprend une chambre de montage (45) s'étendant vers le haut à partir du fond du porte-filtre (40) ;
le canal d'entrée (42) du porte-filtre (40) communique fluidiquement avec la chambre de montage (45) ;
la partie de col (33) de la valve anti-retour annulaire (30) s'étend dans la chambre de montage (45) ;
l'ouverture d'entrée (32) de la valve anti-retour annulaire (30) communique fluidiquement avec la chambre de montage (45) ;
le canal de sortie (44) du porte-filtre (40) est disposé à l'extérieur et espacé de la chambre de montage (45), s'étend vers le haut à partir du fond du porte-filtre (40) et s'étend ensuite vers la surface périphérique externe du porte-filtre (40) ; et
le tampon d'étanchéité (35) est réalisé en élastomères, il est fixé à la partie de col (33) et vient buter fermement contre une surface périphérique de la chambre de montage (45).

4. Unité de filtre selon la revendication 3, dans laquelle
le tampon d'étanchéité (35) a une saillie annulaire (351) formée sur un côté du tampon d'étanchéité (35) tourné vers la surface périphérique de la chambre de montage (45), et vient buter fermement contre la surface périphérique de la chambre de montage (45) ; et
lorsque la valve anti-retour annulaire (30) est placée dans la position fermée, la saillie annulaire (351) entoure un orifice de sortie (422) du canal d'entrée (42) faisant face à la chambre de montage (45).

5. Unité de filtre selon la revendication 4, dans laquelle
la portion supérieure de la cartouche filtrante (10) comprend une portion de blocage (15) incluant de multiples nervures de blocage (151) disposées à des intervalles angulaires ; et
la valve anti-retour annulaire (30) comprend une portion de mise en prise (37) au fond de la base (31) de la valve anti-retour annulaire (30) et incluant de multiples encoches de prise (372) disposées à des intervalles angulaires ; et
les multiples nervures de blocage (151) s'étendent respectivement dans, et sont en prise avec les encoches de prise (372).

6. Unité de filtre selon la revendication 5, dans laquelle
la partie de col (33) de la valve anti-retour annulaire (30) a une première surface limitée (332) et une deuxième surface limitée (333) disposées à un intervalle angulaire ;
le porte-filtre (40) comprend un bloc de limitation (47) configuré pour buter contre la première surface limitée (332) ou la deuxième surface limitée (333) ;
lorsque le bloc de limitation (47) vient buter contre la première surface limitée (332), la valve anti-retour annulaire (30) est placée dans la position fermée ; et
lorsque le bloc de limitation (47) vient buter contre la deuxième surface limitée (333), la valve anti-retour annulaire (30) est placée dans la position ouverte.

7. Unité de filtre selon la revendication 6, dans laquelle
une nervure de guidage (43) est disposée dans l'orifice de sortie (422) du canal d'entrée (42) et présente
une surface supérieure inclinée vers le bas vers la surface périphérique externe du porte-filtre (40) ; et
une surface inférieure inclinée vers le haut vers la surface périphérique externe du porte-filtre (40).
